# EUROPÄISCHE PATENTSCHRIFT

(11) **EP 1 663 555 B1**
(45) Veröffentlichungstag und Bekanntmachung des Hinweises auf die Patenterteilung: **27.06.2007**
(21) Anmeldenummer: 04764978.5
(22) Anmeldetag: 09.09.2004
(51) Int. Cl.: B23B 31/26

(54) **SPANNVORRICHTUNG**
CLAMPING DEVICE
DISPOSITIF DE SERRAGE

(30) Priorität: 17.09.2003 DE 10342951
(43) Veröffentlichungstag der Anmeldung: 07.06.2006
(73) Patentinhaber: OTT-JAKOB GmbH & Co. Spanntechnik KG, 87663 Lengenwang (DE)
(72) Erfinder: GREIF, Josef, 87654 Friesenried (DE); WENK, Wolfgang, 87439 Kempten (DE)
(74) Vertreter: Schwarz, Thomas
(86) Internationale Anmeldenummer: PCT/EP2004/010041
(87) Internationale Veröffentlichungsnummer: WO 2005/035175

(56) Entgegenhaltungen:
- DE-C- 10 159 611
- US-B2- 6 481 940

## Beschreibung

Die Erfindung betrifft eine Spannvorrichtung zum Spannen eines mit einem Kegel-Hohlschaft versehenen Hohlschaftwerkzeugs oder Werkzeughalters in einer mit einem Innenkegel versehenen Maschinenspindel, insbesondere einer Werkzeugmaschine, nach dem Oberbegriff des Anspruchs 1.

Eine derartige Spannvorrichtung ist aus der DE 101 59 611 C1 bekannt. Dort ist innerhalb einer mit einem Innenkegel versehenen Maschinenspindel eine mittels einer Zugstange verschiebbare Spannbuchse angeordnet, an deren Außenseite mehrere in Umfangsrichtung voneinander beabstandete Zangenelemente anliegen. Diese weisen an ihrem vorderen Ende schräge erste Spannflächen zur Anlage an korrespondierenden Spannschrägen des Hohlschaftwerkzeugs und an ihrem hinteren Ende schräge zweite Spannflächen zur Anlage an einer entsprechenden Gegenfläche der Maschinenspindel auf. Durch Axialverschiebung der Spannbuchse werden die Zangenelemente in einer zur Mittelachse der Maschinenspindel parallelen Lage radial nach außen oder innen verschoben, wodurch das Hohlschaftwerkzeug gespannt bzw. freigegeben werden kann. Damit das Hohlschaftwerkzeug auch bei gelösten Zangenelementen noch sicher gehalten und gegen Herausfallen gesichert werden kann, ist bei dieser bekannten Spannvorrichtung innerhalb der Maschinenspindel eine zusätzliche Klemmhülse mit radial federnden Klemmabschnitten zur reibschlüssigen Halterung der Haltezange angeordnet. Durch eine solche zusätzliche Klemmhülse wird allerdings der Fertigungs- und Montageaufwand erhöht.

Aufgabe der Erfindung ist, eine Spannvorrichtung der eingangs genannten Art zu schaffen, die auch ohne zusätzliche Klemmhülse eine sichere Halterung des Hohlschaftwerkzeugs in der Maschinenspindel bei bereits gelöster Zugstange ermöglicht.

Diese Aufgabe wird durch eine Spannvorrichtung mit den Merkmalen des Anspruchs 1 gelöst. Zweckmäßige Weiterbildungen und vorteilhafte Ausgestaltungen der Erfindung sind in den Unteransprüchen angegeben.

Bei der erfindungsgemäßen Spannvorrichtung ist die Spannhülse relativ zur Zugstange axial verschiebbar und wird durch eine Druckfeder entgegen der Lösebewegung der Zugstange axial vorgespannt. Bei der Verschiebung der Zugstange in eine Lösestellung macht die Spannhülse somit nicht die gesamte Axialbewegung der Zugstange mit, sondern wird durch die Druckfeder in einer Stellung zurückgehalten, in der die durch die Spannhülse betätigten Zangenelemente noch mit einem kleinen Bereich ihrer Spannflächen in Eingriff mit der konischen Innenfläche an der Innenseite des Kegel-Hohlschafts stehen. In dieser Stellung wird das Hohlschaftwerkzeug noch innerhalb der Maschinenspindel gehalten, obwohl sich die Zugstange bereits in einer Lösestellung befindet. Dadurch kann der Betätigungsmechanismus zum Lösen der Spannvorrichtung bereits vor dem Eingriff einer automatischen Werkzeugwechseleinrichtung an dem Hohlschaftwerkzeug aktiviert werden, wodurch eine Reduzierung der Werkzeugwechselzeiten ermöglicht wird. Die Zangenelemente führen bei der erfindungsgemäßen Spannvorrichtung keine Schwenkbewegung, sondern einen axialen und radialen Relativhub zur Maschinenspindel aus. Dadurch kann nicht nur ein Haltepunkt, sondern sogar ein Haltebereich erhalten werden. Durch einen derartigen Haltebereich kann das durch den Ausstoß beschleunigte Werkzeug abgebremst werden.

In einer zweckmäßigen Ausführungsform der Erfindung ist die Spannhülse auf einer mit der Zugstange fest verbundenen Ausstoßhülse verschiebbar geführt. Diese Ausstoßhülse kann mit der Zugstange verschraubt oder auf andere geeignete Weise mit ihr verbunden sein.

Die Spannhülse ist in zweckmäßiger Weise zwischen einem vorderen Ringansatz und einem hinteren Ringbund relativ zur Ausstoßhülse verschiebbar, wobei der vordere Ringansatz an der Ausstoßhülse und der hintere Ringbund an einer am hinteren Ende der Ausstoßhülse befestigten Einsatzbuchse vorgesehen sein kann.

Die Druckfeder ist in einer vorteilhaften Ausführung zwischen der vorderen Stirnseite der Spannhülse und einer Vorspannmutter am vorderen Ende der Ausstoßhülse eingespannt. Durch Verstellen der Vorpannmutter kann so die Federkraft verändert werden und damit von außen die Auszugskraft des Werkzeugs an die Bedürfnisse des Kunden angepaßt werden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine erfindungsgemäße Spannvorrichtung in einer Spannstellung;
- **Figur 2**: die in Figur 1 gezeigte Spannvorrichtung in einer Haltestellung und
- **Figur 3**: die in Figur 1 gezeigte Spannvorrichtung in einer Werkzeugwechselstellung.

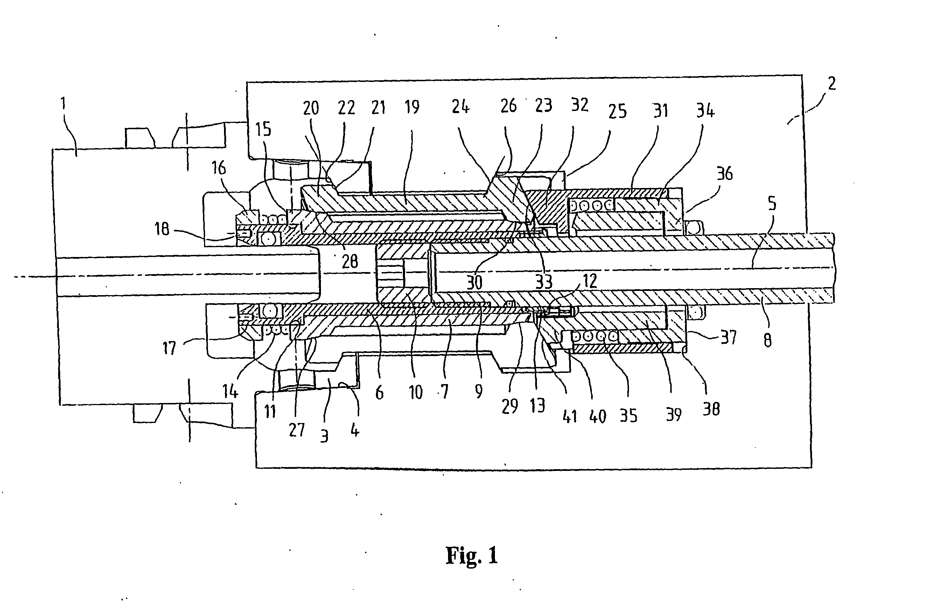

In den Figuren 1 bis 3 ist eine Spannvorrichtung zum Spannen eines Hohlschaftwerkzeugs 1 in einer Maschinenspindel 2 einer Werkzeugmaschine in einer Spannstellung, einer Haltestellung und einer Werkzeugwechselstellung jeweils im Längsschnitt gezeigt. Das Hohlschaftwerkzeug 1 weist einen Kegel-Hohlschaft 3 auf, der in Eingriff mit einem entsprechenden Innenkegel 4 am vorderen Ende der hohlzylindrischen Maschinenspindel 2 gelangt.

Die Spannvorrichtung enthält eine innerhalb der Maschinenspindel 2 zu deren Mittelachse 5 konzentrisch angeordnete Ausstoßhülse 6, auf der eine Spannhülse 7 axial verschiebbar geführt ist. Die Ausstoßhülse 6 ist am vorderen Ende einer Zugstange 8 befestigt, die durch eine nicht dargestellte Federanordnung nach hinten (in Figur 1 nach rechts) vorgespannt und mittels einer ebenfalls nicht dargestellten Betätigungseinrichtung entgegen der Federanordnung in Richtung des Hohlschaftwerkzeugs 1 verschiebbar ist. Die Zugstange 8 hat an ihrem dem Hohlschaftwerkzeug 1 zugewandten vorderen Ende ein Gewinde 9, auf das die Ausstoßhülse 6 aufgeschraubt ist. Durch eine zusätzliche Konterschraube 10 wird die Ausstoßhülse 7 an der Zugstange 8 axial gesichert. Die Spannhülse 7 ist auf der Ausstoßhülse 6 zwischen einem vorderen Ringansatz 11 und einem hinteren Ringbund 12 einer am hinteren Ende der Ausstoßhülse 6 befestigten Einsatzbuchse 13 axial verschiebbar geführt. Bei dem gezeigten Ausführungsbeispiel ist die Einsatzbuchse 13 z.B. über ein entsprechendes Gewinde in die Ausstoßhülse 6 rückwärtig eingeschraubt. Durch eine Druckfeder 14 wird die Spannhülse 7 relativ zur Ausstoßhülse 6 nach hinten vorgespannt. Hierzu ist die Druckfeder 14 zwischen der vorderen Stirnseite 15 der Spannhülse 7 und einer Vorspannmutter 16 eingespannt, die auf ein Außengewinde 17 am radial erweiterten vorderen Ende der Ausstoßhülse 6 aufgeschraubt ist. Die Vorspannkraft kann durch entsprechende Verstellung der Vorspannmutter 16 eingestellt werden. Zum Gegenhalten der Ausstoßhülse 6 bei der Verstellung der Vorspannmutter 13 sind an der Stirnseite der Ausstoßhülse 6 axiale Bohrungen 18 für ein entsprechendes Werkzeug eingebracht.

An der Außenseite der Spannhülse 6 liegen mehrere in Umfangsrichtung gleich beabstandete Zangenelemente 19 an, die sich parallel zur Mittelachse 5 der Maschinenspindel 2 erstrecken. Die Zangenelemente 19 haben an ihrem zum Kegel-Hohlschaft 3 weisenden vorderen Ende eine radiale Verdickung 20 mit einer durch einen konischen Flächenabschnitt gebildeten ersten Spannfläche 21. Diese Spannfläche 21 liegt bei der in Figur 1 dargestellten Spannstellung an einer konischen Innenfläche 22 an der Innenseite des Kegel-Hohlschafts 3 an. Die konische Innenfläche 22 weist gegenüber der Längsachse des Kegel-Hohlschafts 3 denselben Neigungswinkel wie die erste Spannfläche 21 der Zangenelemente 19 auf. Auch an ihrem hinteren Ende haben die Zangenelemente 19 eine Verdickung 23 mit einer zur ersten Spannfläche 21 entgegengesetzt geneigten zweiten Spannfläche 24, mit der sich die Zangenelemente 19 an einer innerhalb einer Ringnut 25 der Maschinenspindel 2 angeordneten konischen Gegenfläche 26 abstützen. Die zweite Spannfläche 24 der Zangenelemente 19 ist ebenfalls durch einen konischen Flächenabschnitt gebildet und weist einen der Neigung der Gegenfläche 26 entsprechenden Neigungswinkel auf.

Die Spannhülse 7 hat an der Außenseite ihres dem Kegel-Hohlschaft 3 zugewandten vorderen Endes erste konische Spannflächenbereiche 27, an denen eine entsprechende Innenfläche 28 am vorderen Ende der Zangenelemente 19 zur Auflage gelangt. An dem hinteren Ende der Spannhülse 7 sind an deren Außenseite zweite konische Spannflächenbereiche 29 vorgesehen, an denen eine korrespondierende Innenfläche 30 am hinteren Ende der Zangenelemente 19 zur Auflage kommt. Die Spannflächenbereiche 27 und 29 der Spannhülse 7 und die korrespondierenden Innenflächen 28 und 30 der Zangenelemente 19 sind derart aufeinander abgestimmt, daß die Zangenelemente 19 durch Axialbewegung der Spannhülse 7 in einer zur Mittelachse 5 der Maschinenspindel 2 parallelen Stellung radial nach außen oder innen verschoben werden.

An die hinteren Enden der Zangenelemente 19 anschließend ist innerhalb der Maschinenspindel 2 ein im weiteren näher erläuterter Abstandshalter angeordnet, durch den die Zangenelemente 19 in Umfangsrichtung in einem vorbestimmten Abstand voneinander gehalten werden. Der Abstandshalter enthält eine radial äußere buchsenartige Halterung 31, die an ihrem den Zangenelemente 19 zugewandten Ende mehrere in Umfangsrichtung gleich beabstandete, in Axialrichtung vorstehende Ansätze 32 mit abgeschrägten Stirnflächen 33 aufweist. Die Halterung 31 ist auf einer Buchse 34 verschiebbar und durch eine Druckfeder 35 in Richtung der Zangenelemente 19 beaufschlagt montiert. Die Buchse 34 hat an ihrem hinteren Ende eine Ringschulter 36 und liegt mit ihrer hinteren Stirnfläche 37 an einer Ringfläche 38 im Inneren der Maschinenspindel 2 an. Innerhalb der Buchse 34 ist eine zu deren Längsachse konzentrische Hülse 39 angeordnet, die mit ihrer hinteren Stirnfläche an der Ringschulter 36 anliegt und an ihrem vorderen Ende mehrere in Umfangsrichtung beabstandete und zwischen die Ansätze 32 der Halterung 31 ragende Ringsegmente 40 mit schrägen Anlageflächen 41 aufweist.

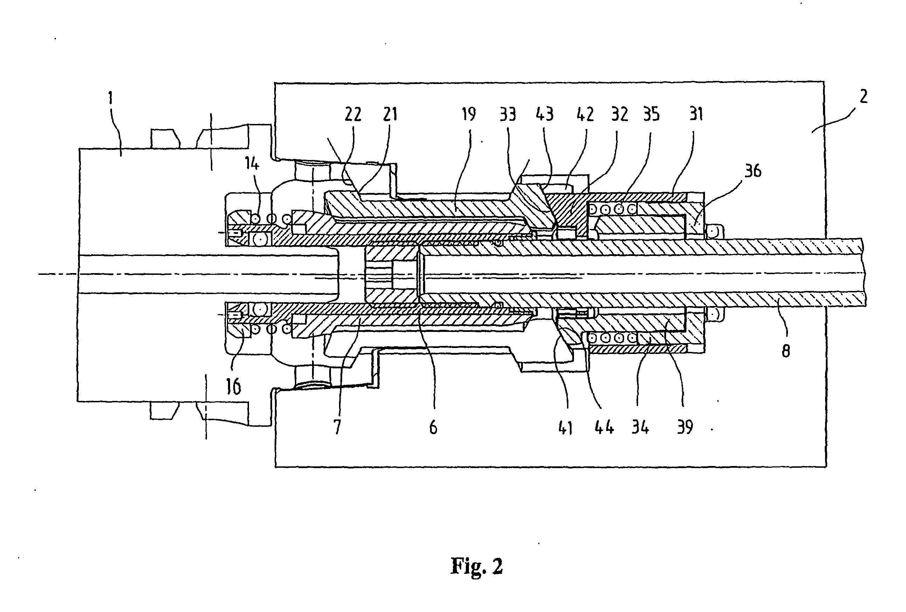

Wie aus Figur 2 hervorgeht, greifen die Ansätze 32 der Halterung 31 in eine Nut 42 an dem rückseitigen Ende der Zangenelemente 19 ein und liegen mit ihrer abgeschrägten Stirnfläche 33 an einer entsprechenden schrägen Gegenfläche 43 im Grund der Nut 42 an. Die Hülse 39 liegt mit ihren schrägen Anlageflächen 41 an einer Abschrägung 44 am hinteren Ende der Zangenelemente 19 an. Die Abschrägung 44 weist eine entgegengesetzte Neigung zur schrägen Gegenfläche 43 auf.

### Die vorstehend beschriebene Spannvorrichtung funktioniert wie folgt:

Bei der in Figur 1 dargestellten Spannstellung wird die Ausstoßhülse 6 über die Zugstange 8 und eine als Tellerfederpaket ausgeführte - nicht dargestellte - Federanordnung in eine dort gezeigte zurückgezogene Stellung gedrückt. In dieser Stellung liegt die Spannhülse 7 an dem vorderen Ringansatz 11 der Ausstoßhülse 6 an, wobei sich die Druckfeder 14 in einem zusammengedrückten Zustand befindet. Die Zangenelemente 19 werden in dieser Stellung durch die Spannhülse 7 radial nach außen gedrückt, wobei die Spannflächen 21 und 24 in Eingriff mit der konischen Innenfläche 22 am Kegel-Hohlschaft 3 bzw. der Gegenfläche 26 in der Maschinenspindel 2 sind. Dadurch wird das Hohlschaftwerkzeug 1 in der Maschinenspindel 2 unter Zug gehalten.

Zum Lösen der Spannvorrichtung wird die Ausstoßhülse 6 mit Hilfe der Zugstange 8 z.B. durch einen Hydraulikkolben oder einen anderen geeigneten Betätigungsmechanismus aus der in Figur 1 gezeigten Spannstellung in Richtung des Hohlschaftwerkzeugs 1 verschoben, bis sie die in Figur 2 gezeigte Stellung einnimmt. Durch die Vorwärtsbewegung der Ausstoßhülse 6 wird auch die Spannhülse 7 in Richtung des Hohlschaftwerkzeugs 1 verschoben, wobei sich die an der Außenseite der Spannhülse 7 anliegenden Zangenelemente radial nach innen bewegen. Allerdings macht die auf der Ausstoßhülse 6 verschiebbar geführte Spannhülse 7 nicht die gesamte Axialbewegung der Ausstoßhülse 6 mit, sondern wird durch die Druckfeder 14 in einer in Figur 2 dargestellten Halteposition gehalten. In dieser Halteposition sind die an der Außenseite der Spannhülse 7 anliegenden Zangenelemente 19 so weit radial nach innen verschoben, dass nur noch ein kleiner Bereich ihrer Spannflächen 21 in Eingriff mit der konischen Innenfläche 22 an der Innenseite des Kegel-Hohlschafts 3 steht. In dieser Stellung wird das Hohlschaftwerkzeug 1 noch innerhalb der Maschinenspindel 2 gehalten, obwohl sich die Ausstoßhülse 6 und die Zugstange 2 mit deren Betätigungsmechanismus bereits in einer Lösestellung befinden.

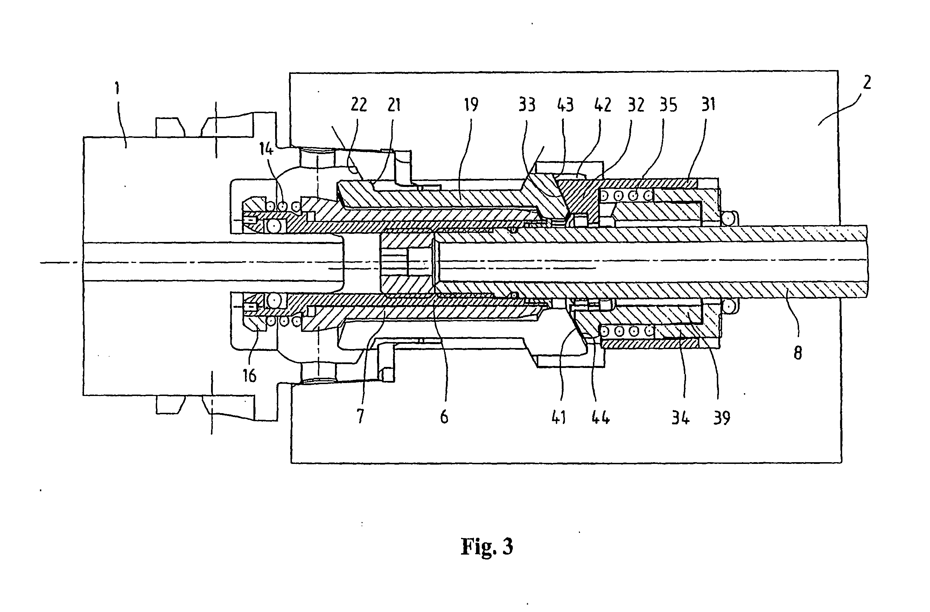

Wenn das Hohlschaftwerkzeug 1 in dieser Stellung dann z.B. durch einen automatischen Werkzeugwechsler aus der Maschinenspindel 2 herausgezogen wird, werden die Zangenelemente 19 weiter radial nach innen verschoben, wodurch die Spannhülse 6 entgegen der Kraft der Druckfeder 14 aus der in Figur 2 gezeigten Haltestellung in eine in Figur 3 dargestellte Werkzeugwechselstellung verschoben wird. In dieser Stellung sind die an der Außenseite der Spannhülse 7 anliegenden Zangenelemente 19 dann so weit radial nach innen verschoben, dass deren Spannflächen 21 außer Eingriff mit der konischen Innenfläche 22 an der Innenseite des Kegel-Hohlschafts 3 gelangen und das Hohlschaftwerkzeug 1 ohne weiteres entnommen werden kann.

Der Betätigungsmechanismus zum Lösen der Spannvorrichtung kann daher bereits vor dem Eingriff einer automatischen Werkzeugwechseleinrichtung an dem Hohlschaftwerkzeug 1 aktiviert werden, wodurch eine Reduzierung der Werkzeugwechselzeiten ermöglicht wird.

## Patentansprüche

1. Vorrichtung zum Spannen eines mit einem Kegel-Hohlschaft (3) versehenen Hohlschaftwerkzeugs (1) oder Werkzeughalters in einer mit einem Innenkegel (4) versehenen Maschinenspindel (2), insbesondere einer Werkzeugmaschine, mit einer innerhalb der Maschinenspindel (2) axial verschiebbaren Spannhülse (7), einer zwischen einer Lösestellung und einer Spannstellung bewegbaren Zugstange (8) zur Verschiebung der Spannhülse (7) und mehreren der Spannhülse (7) zugeordneten Zangenelementen (19), die durch die Verschiebung der Spannhülse (7) radial bewegbar sind und Spannflächen (21, 24) zur Anlage an einer konischen Innenfläche (22) des Kegel-Hohlschafts (3) und einer Gegenfläche (26) an der Maschinenspindel (2) aufweisen, **dadurch gekennzeichnet, dass** die Spannhülse (7) relativ zur Zugstange (8) axial verschiebbar und durch eine Druckfeder (14) entgegen der Lösebewegung der Zugstange (8) axial vorgespannt ist.

2. Vorrichtung nach Anspruch 1, **dadurch gekennzeichnet, dass** die Spannhülse (7) auf einer mit der Zugstange (8) fest verbundenen Ausstoßhülse (6) verschiebbar geführt ist.

3. Vorrichtung nach Anspruch 1 oder 2, **dadurch gekennzeichnet, dass** die Spannhülse (7) zwischen einem vorderen Ringansatz (11) und einem hinteren Ringbund (12) verschiebbar ist.

4. Vorrichtung nach Anspruch 3, **dadurch gekennzeichnet, dass** der vordere Ringansatz (11) an der Ausstoßhülse (6) und der hintere Ringbund (12) an einer am hinteren Ende der Ausstoßhülse (6) befestigten Einsatzbuchse (13) angeordnet sind.

5. Vorrichtung nach einem der Ansprüche 2 bis 4, **dadurch gekennzeichnet, dass** die Ausstoßhülse (6) auf ein Gewinde (9) am vorderen Ende der Zugstange (8) aufgeschraubt ist.

6. Vorrichtung nach Anspruch 5, **dadurch gekennzeichnet, dass** die Ausstoßhülse (6) durch eine zusätzliche Konterschraube (10) an der Zugstange (8) gesichert ist.

7. Vorrichtung nach einem der Ansprüche 1 bis 6, **dadurch gekennzeichnet, dass** die Druckfeder (14) zwischen der vorderen Stirnseite (15) der Spannhülse (7) und einer Vorspannmutter (16) eingespannt ist.

8. Vorrichtung nach Anspruch 7, **dadurch gekennzeichnet, dass** die Vorspannmutter (16) auf ein Außengewinde (17) am vorderen Ende der Ausstoßhülse (6) aufgeschraubt ist.

9. Vorrichtung nach einem der Ansprüche 1 bis 8, **dadurch gekennzeichnet, dass** die Zangenelemente (19) durch einen Abstandshalter (31, 39) in Umfangsrichtung voneinander beabstandet gehalten sind.

10. Vorrichtung nach Anspruch 9, **dadurch gekennzeichnet, dass** der Abstandshalter (31, 39) eine radial äußere buchsenartige Halterung (31) mit abgeschrägten Stirnflächen (33) an axial vorstehenden Ansätzen (32) zur Anlage an schrägen Gegenflächen (42) an der Rückseite der Spannklauen (19) aufweist.

11. Vorrichtung nach Anspruch 10, **dadurch gekennzeichnet, dass** die Halterung (31) durch eine Druckfeder (35) in Richtung der Spannklauen (19) beaufschlagt wird.

12. Vorrichtung nach Anspruch 10 oder 11, **dadurch gekennzeichnet, dass** der Abstandhalter (31, 39) eine zur Halterung (31) konzentrische innere Hülse (39) aufweist, die mehrere in Umfangsrichtung beabstandete und zwischen die Ansätze (32) der Halterung (31) ragende Ringsegmente (40) mit schrägen Anlageflächen (41) zur Anlage an einer Abschrägung (44) der Zangenelemente (19) enthält.

## Claims

1. Device for clamping a hollow shank tool (1) or tool holder provided with a tapered hollow shank (3) in a machine spindle (2) provided with an internal taper (4), in particular of a machine tool, with a clamping sleeve (7) which is displaceable axially inside the machine spindle (2), a draw rod (8) which is moveable between a release position and a clamping position for displacing the clamping sleeve (7), and a plurality of gripping elements (19) which are associated with the clamping sleeve (7) and which are moveable radially by the displacement of the clamping sleeve (7) and exhibit clamping faces (21, 24) for bearing on a conical internal face (22) of the tapered hollow shank (3) and an opposing face (26) on the machine spindle (2), **characterised in that** the clamping sleeve (7) is displaceable axially relative to the draw rod (8) and is preloaded axially by a compression spring (14) against the release movement of the draw rod (8).

2. Device according to claim 1, **characterised in that** the clamping sleeve (7) is guided displaceably on an ejecting sleeve (6) which is connected firmly to the draw rod (8).

3. Device according to claim 1 or 2, **characterised in that** the clamping sleeve (7) is displaceable between a front annular shoulder (11) and a rear annular collar (12).

4. Device according to claim 3, **characterised in that** the front annular shoulder (11) is arranged on the ejecting sleeve (6) and the rear annular collar (12) is arranged on an inserted bush (13) fastened to the rear end of the ejecting sleeve (6).

5. Device according to one of claims 2 to 4, **characterised in that** the ejecting sleeve (6) is screwed on to a thread (9) at the front end of the draw rod (8).

6. Device according to claim 5, **characterised in that** the ejecting sleeve (6) is secured to the draw rod (8) by an additional locking screw (10).

7. Device according to one of claims 1 to 6, **characterised in that** the compression spring (14) is clamped between the front end (15) of the clamping sleeve (7) and a preloading nut (16).

8. Device according to claim 7, **characterised in that** the preloading nut (15) is screwed on to an external thread (17) at the front end of the ejecting sleeve (6).

9. Device according to one of claims 1 to 8, **characterised in that** the gripping elements (19) are held apart in the circumferential direction by a spacer (31, 39).

10. Device according to claim 9, **characterised in that** the spacer (31, 39) exhibits a radially outer bush-like mounting (31) with bevelled end faces (33) on axially protruding shoulders (32) for bearing on bevelled opposing faces (42) on the rear side of the clamping claws (19).

11. Device according to claim 10, **characterised in that** a compression spring (35) acts on the mounting (31) in the direction of the clamping claws (19).

12. Device according to claim 10 or 11, **characterised in that** the spacer (31, 39) exhibits an inner sleeve (39) which is concentric with the mounting (31) and comprises a plurality of ring segments (40) which are spaced in the circumferential direction and project between the shoulders (32) of the mounting (31) and have bevelled bearing faces (41) for bearing on a bevel (44) on the gripping elements (19).

## Revendications

1. Dispositif pour immobiliser un outil (1) à tige creuse ou un porte-outil doté d'une tige conique creuse (3) dans une broche (2) de machine, notamment d'une machine-outil, munie d'un cône intérieur (4), comprenant une douille de serrage (7) mobile axialement à l'intérieur de la broche (2) de machine, une barre de traction (8) déplaçable d'une position de libération à une position de serrage pour déplacer la douille de serrage (7) et plusieurs éléments à pince (19) associées à la douille de serrage (7) qui sont mobiles radialement par le déplacement de la douille de serrage (7) et présentent des surfaces de serrage (21, 24) destinées à s'appliquer contre une surface intérieure conique (22) de la tige conique creuse (3), et une surface complémentaire (26) sur la broche (2), **caractérisé en ce que** la douille de serrage (7) est déplaçable axialement par rapport à la barre de traction (8) et est précontrainte axialement par un ressort de pression (14) contre le mouvement de libération de la barre de traction (8).

2. Dispositif selon la revendication 1, **caractérisée en ce que** la douille de serrage (7) est guidée de façon déplaçable sur une douille d'éjection (6) solidaire de la barre de traction (8).

3. Dispositif selon la revendication 1 ou 2, **caractérisée en ce que** la douille de serrage (7) est déplaçable entre une saillie annulaire avant (11) et un épaulement annulaire arrière (12).

4. Dispositif selon la revendication 3, **caractérisée en ce que** la saillie annulaire avant (11) est disposée sur la douille d'éjection (6) et l'épaulement annulaire arrière (12) sur une douille de support (13) fixée à l'extrémité arrière de la douille d'éjection (6).

5. Dispositif selon l'une des revendications 2 à 4, **caractérisé en ce que** la douille d'éjection (6) est vissée sur un filetage (9) à l'extrémité avant de la barre de traction (8).

6. Dispositif selon la revendication 5, **caractérisée en ce que** la douille d'éjection (6) est solidement fixée sur la barre de traction (8) par une vis de blocage (10) complémentaire.

7. Dispositif selon l'une des revendications 1 à 6, **caractérisé en ce que** le ressort de pression (14) est comprimé entre la face frontale avant (15) de la douille de serrage (7) et un écrou de précontrainte (16).

8. Dispositif selon la revendication 7, **caractérisé en ce que** l'écrou de précontrainte (16) est vissé sur un filetage extérieur (17) situé à l'extrémité avant de la douille d'éjection (6).

9. Dispositif selon l'une des revendications 1 à 8, **caractérisé en ce que** les éléments à pince (19) sont maintenus espacés les uns des autres dans la direction du pourtour par un écarteur (31, 39).

10. Dispositif selon la revendication 9, **caractérisé en ce que** l'écarteur (31, 39) présente un support (31) semblable à une douille situé à l'extérieur dans la direction radiale, qui comporte des surfaces frontales obliques (33) sur des saillies axiales (32) destinées à venir s'appliquer contre des surfaces complémentaires (42) au dos des griffes de serrage (19).

11. Dispositif selon la revendication 10, **caractérisé en ce que** le support (31) est sollicité par un ressort de pression (35) en direction des griffes de serrage (19).

12. Dispositif selon la revendication 10 ou 11, **caractérisé en ce que** l'écarteur (31, 39) présente une douille intérieure (39) concentrique par rapport au support (31), qui comprend plusieurs segments annulaires (40) espacés dans la direction du pourtour et s'encastrant entre les saillies (32) du support (31), qui sont dotés de surfaces de contact obliques (41) destinées à venir s'appliquer contre une partie oblique (44) des éléments à pince (19).
